# EUROPÄISCHE PATENTSCHRIFT

(11) **EP 1 729 202 B1**
(45) Veröffentlichungstag und Bekanntmachung des Hinweises auf die Patenterteilung: **07.11.2007**
(21) Anmeldenummer: 06009747.4
(22) Anmeldetag: 11.05.2006
(51) Int. Cl.: G06F 1/20

(54) **Gehäuse für elektronische Geräte und Systeme**
Enclosure for electronic devices and systems
Boîtier pour appareils et systèmes électroniques

(30) Priorität: 31.05.2005 DE 102005034573; 13.07.2005 DE 102005032607
(43) Veröffentlichungstag der Anmeldung: 06.12.2006
(73) Patentinhaber: m.pore GmbH, 01277 Dresden (DE); FPE Fischer GmbH, 88299 Leutkirch (DE)
(72) Erfinder: Fischer, Ulrich, 88299 Leutkirch (DE); Girlich, Dieter Dr., 01309 Dresden (DE); Pfeffer, Roland, 88299 Leutkirch (DE); Willer, Bernd, 85368 Moosburg/Isar (DE)
(74) Vertreter: Kaufmann, Sigfrid

(56) Entgegenhaltungen:
- EP-A- 1 272 024
- EP-A- 1 429 592
- DE-A1- 10 123 456
- DE-A1- 10 207 671
- DE-A1- 10 324 190
- US-A- 5 847 926

## Beschreibung

Die Erfindung betrifft die Entwärmung von elektronischen Komponenten in elektronischen Geräten, insbesondere Computer, unter Einbeziehung des Gehäuses.

In technischen Geräten mit Leistungselektronik muß die Verlustleistungswärme effizient abgeleitet werden. Wärmestau führt zu Temperaturerhöhungen in elektronischen Bauteilen und somit zu Verkürzungen der Lebensdauer, Leistungsreduzierungen und in letzter Konsequenz zur Zerstörung von Bauteilen.

Hohe Packungsdichte der Bauteile und gesteigerte Taktfrequenzen erfordern, insbesondere bei Computerprozessoren (CPU's), eine effiziente Kühlung.

Der Prozessorkühler besteht üblicherweise aus einem Kühlkörper aus Aluminium und/oder Kupfer mit lüftergestützter Konvektion. Analog zur Leistungssteigerung wurden die Kühlkörper und Lüfter immer größer und leistungsstärker. Ein unter Volllast betriebener Prozessor der Prescot Serie, produziert beispielsweise eine Verlustleistung von 120 W auf einigen wenigen cm². Um einen störungsfreien Betrieb zu gewährleisten, muß das Kühlsystem für die CPU eine Sperrschichttemperatur von =<75°C halten.

Für die thermische Auslegung einer Kühlerkonfiguration sind nachfolgende Rahmenbedingungen zu beachten:
a) Die Lärmentwicklung der Lüfter verhält sich proportional zur Lüfterdrehzahl und Strömungsgeschwindigkeit der Kühlluft.
b) Der Druckverlust im Kühlkörper steigt im Quadrat zur Strömungsgeschwindigkeit.
c) Die Wärmeabfuhr verhält sich proportional zur Volumenströmungsgeschwindigkeit.

Das Kühlsystem muß unter Berücksichtigung möglichst aller Einflußfaktoren so ausgelegt werden, daß neben der CPU auch die Graphikkarte, das Netzteil und die Festplatte gekühlt werden. Darüber hinaus sind Verschmutzungen von Kühlkörpern durch Einsatz von Filtern im Luftstrom, bei gleichzeitig geforderter elektromagnetischer Abschirmung, zu minimieren.

Nach dem Stand der Technik arbeiten Kühlsysteme mit Kühlkörpern und Lüfter sowie in Ausnahmefällen mit effizienteren, jedoch wesentlich teureren Flüssigkeitskühlern.

In DE 20 2004 007 907 wird z. B. vorgeschlagen, für die Kühlung eines Computers eine Wasserkühlung zu verwenden, die aus einer Vielzahl von Kühlrippen besteht, durch die sich ein Kühlwasserrohr erstreckt. Das Kühlwasser wird mittels einer Pumpe durch Kühlwasserzuleitung in die Kühlwasserableitung befördert. Eine Kühlplatte dient der Absorption der Abwärme des zu kühlenden Gegenstandes; ein Kühlventilator ist an einem Rahmen befestigt, um die Kühlrippen zu durchlüften.

WO 99/53392 offenbart eine Vorrichtung zur Kühlung eines in einem Gehäuse untergebrachten PC's, deren Merkmalskombination eine passive Kühlung durch Wärmeableitung, Konvektion und Kamineffekt bewirkt. Erreicht wird dies durch Plazierung des Prozessor-Modules an einer definierten Stelle.

In DE 202 04 201 wird ein verbesserter CPU-Kühler vorgestellt, der einen Kühlsockel, auf dessen Oberfläche sich ein Feld von Vertiefungen befindet, umfaßt. Der Kühlsockel ist auf der CPU aufgebracht; darüber ist eine Stauscheibe angeordnet. Auf der Stauscheibe befinden sich Öffnungen, die den Luftstrom auf den Kühlsockel lenken und dort für die Abführung der durch die CPU erzeugten Wärme sorgen.

Aus DE 91 918 349 ist ein Gehäuse für elektronische Leiterplatten zu entnehmen, bei dem durch thermoelektrische Kühlsysteme ein Temperaturschutz geschaffen wird.

DE 203 04 204 beschreibt eine Mehrschichtkühlkörperwand und ein passives Kühlsystem, das die Wand des Netzteiles, auf der die Wärme abgebenden Komponenten befestigt sind, direkt mit der Außenwand des Gehäuses verbindet. Die Wärme des Prozessors wird auf eine oder mehrere Metallplatten der Mehrschichtkühlkörperwände übertragen. Das Blech wird durch das Gehäuse nach außen geführt, um auf der Außenseite die Wärme an die Umgebung abzugeben, wofür entsprechende Durchführungsstellen durch das Gehäuse erforderlich sind. Der Prozessor wird ohne Lüfter betrieben, was für die neuesten, leistungsstärkeren CPU's nicht mehr in Frage kommt.

In WO 99/14807 wird ein Kanalsystem zur Entwärmung der CPU vorgestellt, wobei das Kühlmittel zur Reduzierung des thermischen Widerstandes direkt über ein spezielles Kanalsystem an den Prozessor herangeführt wird. Die Wärme verbleibt allerdings in dem Fluid und wird im Kreis transportiert.

Aus EP 1 018 159 ist ein Kühlsystem bekannt, das ein Fluid zur Wärmeübernahme direkt an das Substrat des Elektronik-Bauteiles heranführt.

Schließlich wird in EP 1 429 592 A1 ein elektromagnetisches Abschirmelement offenbart, das vorzugsweise zur Abdeckung von Lüftungsöffnungen in Computergehäusen eingesetzt wird. Das Abschirmelement besteht aus einer ca. 1 cm dicken Platte, die aus Gewichtsgründen entweder aus geschäumtem Material (geschlossenporig) oder alternativ dazu aus Kunststoff, Kork oder Gummi besteht. Die Platte ist mit als Luftkanälen dienenden Durchbrüchen versehen, die typischerweise einen Durchmesser von 10 bis 15 mm aufweisen. Bei der Verwendung von isolierenden Materialien wird die Platte so behandelt, dass mindestens die Wände der Luftkanäle elektrisch leitend werden.

Das beschriebene Abschirmelement stellt sicher eine Bereicherung des Standes der Technik dar, da mit ihm ohne ELV-Einbußen vergleichsweise große Lüftungsöffnungen in Computergehäuse eingebracht werden können. Die Herstellung der regelmäßig angeordneten Kanäle ist jedoch relativ aufwändig. Außerdem sind die Elemente für einen Einsatz als Kühler ungeeignet, da praktisch alle vorgeschlagenen Materialien schlecht wärmeleitend sind und außerdem strömungstechnisch bedingt aufgrund des weitgehend laminaren Luftstroms durch die Elemente kein guter Wärmeaustausch stattfinden kann. Die Erfindung dient also vordergründig der Sicherung der EMV; für die Entwärmung von elektronischen Geräten und Systemen ist ihr Beitrag relativ unwesentlich.

Die fortwährende Leistungssteigerung im Bereich der Prozessorenentwicklung hat zur Folge, daß durch den Wärmestrom und die Miniaturisierung vor allem die Dichte des Wärmestroms immer weiter zunehmen wird. Nach dem Stand der Technik kann eine erhöhte Kühlleistung durch größere Kühlkörper erbracht werden. Der thermische Wärmestromwiderstand ist dabei so gering wie möglich zu halten, um einen guten Wärmeabfluß zu gewährleisten. Das bedingt Kupfer als Kühlermaterial. Große Kupfer-Kühler weisen ein erhebliches Gewicht auf, das weit über 600 Gramm liegen kann; neueste Kühlsysteme wiegen bereits über 1.000 Gramm.

Im Zuge der Miniaturisierung kann diese technologische Entwicklung nicht weiter vorangetrieben werden, zumal das hohe Gewicht der Kühler die Gefahr in sich birgt, die Leiterplatte zu zerstören. Weiterhin können während des Transportes Beschleunigungen bis zu 50 g auftreten, die den Prozessor aus dem Sockel reißen oder Leiterbahnen unterbrechen. Auch deshalb ist eine Gewichtsbeschränkung erforderlich.

Andererseits sind zur notwendigen Wärmeabfuhr ständig höhere Lüfterleistungen erforderlich, die jedoch die Geräuschpegel am Arbeitsplatz in unzumutbare Regionen treiben.

Demgegenüber führt der Wärmestau im Gehäuse zu Gehäuselufttemperaturen bis zu 45°C, d. h., für die Entwärmung der Prozessoren steht dann nur noch ein delta t von 30°C zur Verfügung. Zudem beeinflußt die hohe Umgebungstemperatur im Gehäuse andere Bauteile, wie z.B. die Festplatte. Jedes unnötige °C über Normaltemperatur senkt die Effizienz und Zuverlässigkeit um 2 bis 3%; 5°C über Normaltemperatur erhöhen die Ausfallwahrscheinlichkeit der Elektronikbauteile bereits um ca. 10%. Naheliegende konstruktive Abhilfe wie Lüftungskanäle oder große Öffnungen im Gehäuse sind aus EMV-Gründen nicht zulässig. Kunststofffilter, die hierfür benötigt würden, schirmen hochfrequente Signale nicht ab, was zu Störungen bei benachbarten Geräten führen kann und ein hohes Risiko durch Abhören der Signale durch Dritte in sich birgt.

Auch die Kühlung durch die Platine, nämlich dadurch, daß die in den elektronischen Bauteilen entstandene Verlustleistung gezielt über spezielle Kontaktierungen, sogenannte Heat Sinks, auf die Leiterplatte mit verteilt wird, wird durch die Kleinheit der Kontaktierungen erschwert. Kontaktierungen <1mm sind für den Wärmetransport ungeeignet; typische Elektronik-Kontaktierungen liegen weit unter 1 mm. Selbst wenn die CPU über die Platine entwärmt werden könnte, verbleibt die Wärme im Gehäuse und reduziert die Wirksamkeit des aktiven Systems aus Kühlkörper und Lüfter. Die Heat-Sink-Platine selbst ist ein passiver Kühler mit Speicherwirkung. Die heiße Platine erfordert Zeit zur Entwärmung und schädigt in dieser Zeit die aktiven und passiven Elektronikbauteile.

Kompakte Bauformen in der Elektronik und ungünstige Bedingungen im Gerät selbst erfordern demzufolge neue Kühlkonzepte. Dabei gilt es, neben der hohen Verlustleistung der CPU die weiteren Bauteile, nämlich Netzteil, Festplatte, Graphikkarte und Speicherchips, wärmetechnisch zu beherrschen, da sie ebenfalls aktiv durch Kühlsysteme entwärmt werden und folglich die Temperatur im Gehäuse erhöhen. Infolge dessen, daß der Wärmestrom nur über die Potenzialdifferenz aus Prozessortemperatur und Umgebungstemperatur abfließt, reduziert jede Erhöhung der Umgebungstemperatur diesen Abfluß, d. h., die Entwärmung des Prozessors verschlechtert sich.

Aufgabe der Erfindung ist es, die Wärme, die infolge der Verlustleistung elektronischer Bauteile entsteht, effizient und nachhaltig abzuführen.

Die Aufgabe wird dadurch gelöst, daß an definierten Stellen des Gehäuses von elektronischen Geräten, insbesondere Computer, zur Wärmeableitung offenporiger Metallschaum eingesetzt wird. Hierzu werden in den vollflächigen Wänden des Gehäuses partiell Segmente einer solchen Schaumstruktur eingebracht. Die zielgerichtete Verwendung von offenporigem Metallschaum als Teil des Gehäuses ermöglicht es, daß die Luft leichter durch das Gehäuse strömen kann. Der damit bewirkte Beitrag zur Abführung der unerwünschten Wärme ist erheblich und in seiner Auswirkung auf das Wärmemanagement überraschend. Gleichzeitig ist die EMV-Sicherheit gewährleistet, da offenporiger Metallschaum in bestimmten Konstellationen elektromagnetische Strahlung abschirmt. Offenporiger Metallschaum aus Aluminium mit einer Porengröße 30 ppi und einer Dicke von 10 mm ist hierfür besonders geeignet. Eine weitere Verbesserung wird erreicht, indem eine zusätzliche metallische Schicht, z. B. Nickel, auf die Schaumstruktur aufgebracht wird. Der Metallschaum wirkt in jedem Fall selbst als Luftfilter.

Dem Wesen der Erfindung folgend ist vorgesehen, den Metallschaum mit einer Flüssigkeitskühlung zu kombinieren. Demgemäß wird die Wärme direkt an den zu kühlenden Bauteilen durch einen effizienten Wärmetauscher auf das Kühlmedium übertragen. Das Kühlmedium wird mittels Pumpe in einem Leitungssystem direkt durch den offenporigen Metallschaum gepumpt und die Wärme durch einen Lüfter nach außen abgegeben. Durch die Wärmeabgabe nach außen wird verhindert, daß sich die Gehäusetemperatur erhöht. Damit stehen weitere delta T von ca. 15°C zur Prozessorkühlung zur Verfügung und gewährleisten eine zuverlässige Performance aller Bauteile im Gehäuse.

Die Erfindung wird nachfolgend anhand von drei Ausführungsbeispielen näher erläutert.

### Beispiel 1

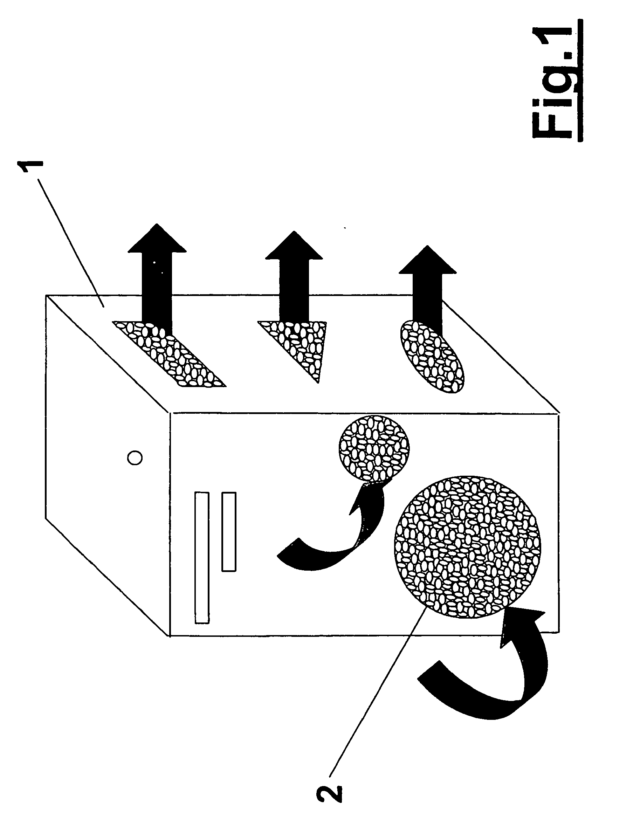

Hierfür zeigt Fig. 1 die Verwendung offenporigen Metallschaums zur passiven/aktiven Kühlungsunterstützung. Die dabei im Gehäuse 1 eingesetzte dreidimensionale Schaumstruktur 2 ist in der Ansichtsfläche kreisförmig, oval, drei- oder viereckig ausgeführt; sie kann aus dekorativen Gründen verschiedenfarbig gestaltet sein.

Die elektronischen Bauteile, wie CPU, Festplatte und Netzteil, werden durch ein Kühlsystem bekannter Ausführung entwärmt, so daß sich die Wärme nicht im Gehäuse 1 staut, da durch die Öffnungen, in denen der Metallschaum 2 eingebracht ist, die Luft passiv oder aktiv entweicht und die kühlere Umgebungsluft nachgezogen wird.

### Beispiel 2

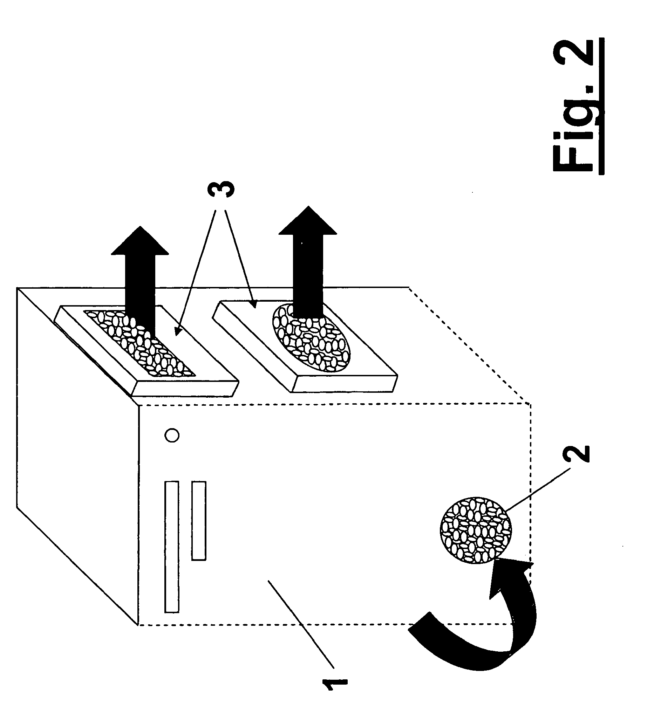

Fig. 2 zeigt ein Gehäuse 1, das aktiv an dem offenporigen Metallschaum von einem Lüfter 3 unterstützt entwärmt wird.

### Beispiel 3

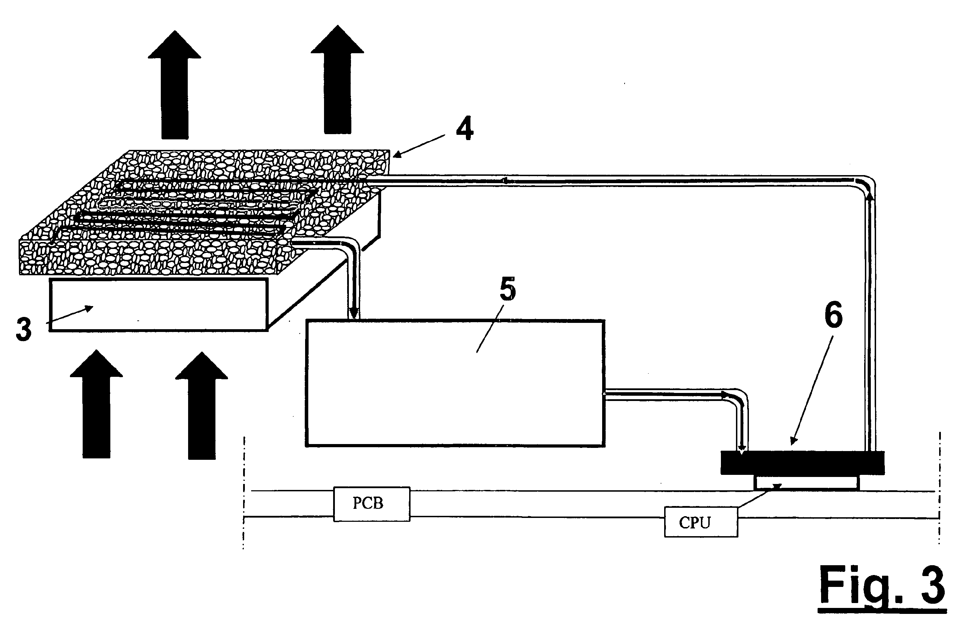

Fig. 3 zeigt die Verwendung von offenporigem Metallschaum in einem Gehäuse mit integriertem, wärmetransportierendem Leitungssystem, wobei das Metallschaum-Gehäusewandteil als Radiator 4 ausgeführt ist. Das Leitungssystem kann - wie hier gezeigt - im Metallschaum 2 eingebracht oder ggf. auch an dem Metallschaum 2 angebracht sein. Die Wärme wird mittels eines Lüfters 3, eines Flüssigkeitskühlmittels, für das das Flüssigkeits- und Pumpengehäuse 5 steht, und eines Wärmetauschers 6 aktiv an die Umgebung abgegeben. Das Geräusch und das Gewicht des Gerätes (Computer) werden im Vergleich zu einer kompakten Ausführung deutlich reduziert.

### Liste der verwendeten Bezugszeichen

- 1: Gehäuse
- 2: offenporiger Metallschaum
- 3: Lüfter
- 4: Metallschaum-Gehäusewandteil als Radiator
- 5: Flüssigkeits- und Pumpengehäuse
- 6: Wärmetauscher

## Patentansprüche

1. Gehäuse für elektronische Geräte und Systeme, **dadurch gekennzeichnet, daß** in einer Wand oder in mehreren Wänden des Gehäuses (1) jeweils ein oder mehrere Segmente aus offenporigem Metallschaum (2), die dem Wärmemanagement dienen und hierzu aktiv mittels Lüfter (3) luft- und/oder flüssigkeitsdurchströmt werden, wobei die Metallschaumstruktur (2) als Filter dient, integriert sind.

2. Gehäuse nach Anspruch 1, **dadurch gekennzeichnet, daß** das Metallschaumsegment (2) ein Gehäusewandteil ist, das mit integriertem Leitungssystem als Radiator (4) für einen Flüssigkeitskühler dient.

3. Gehäuse nach Anspruch 1 und 2, **dadurch gekennzeichnet, daß** das Leitungssystem auf dem Metallschaum (2) durch Löten oder Pressen aufgebracht ist.

4. Gehäuse nach Anspruch 1, **dadurch gekennzeichnet, daß** die Metallschaumsegmente (2) in der Ansichtsfläche kreisförmig, oval oder vieleckig ausgeführt sind.

5. Gehäuse nach Anspruch 1 und einem der vorstehenden Ansprüche, **dadurch gekennzeichnet, daß** das Metallschaumsegment (2) aus Aluminium besteht, eine Porengröße von 30 ppi aufweist und eine Dicke von 10 mm besitzt.

6. Gehäuse nach Anspruch 1 und einem der vorstehenden Ansprüche, **dadurch gekennzeichnet, daß** der Metallschaum mit einer zusätzlichen Metallschicht belegt ist.

7. Gehäuse nach Anspruch 6, **dadurch gekennzeichnet, daß** die Metallschicht aus Nickel besteht.

## Claims

1. A housing for electronic devices and systems, **characterised in that** one or more segments of open-pore metallic foam (2) serving for heat management are integrated into one or each of several walls of the housing (1) and to this end an air and/or liquid flow is directed actively through the foam by way of fans (3), wherein the metallic foam structure (2) serves as a filter.

2. A housing according to Claim 1, **characterised in that** the metallic foam segment (2) represents a housing wall section which serves with an integrated piping system as a radiator (4) for a liquid cooler.

3. A housing according to Claims 1 and 2, **characterised in that** the piping system is attached to the metallic foam (2) by soldering or pressing.

4. A housing according to Claim 1, **characterised in that** the metallic foam segments (2) are arranged in the form of a circle, oval or polygon in the visible surface.

5. A housing according to Claim 1 and one of the other above claims, **characterised in that** the metallic foam segment (2) is aluminium, displays a pore size of 30 ppi and possesses a thickness of 10 mm.

6. A housing according to Claim 1 and one of the other above claims, **characterised in that** the metallic foam is provided with an additional metal layer.

7. A housing according to Claim 6, **characterised in that** the metal layer is nickel.

## Revendications

1. Bâti pour appareils et systèmes électroniques, **caractérisé en ce qu'**un ou plusieurs segments de mousse métallique à ports ouverts (2), servant à la gestion thermique et refroidis activement à l'air et/ou par un fluide au moyen d'un ventilateur (3), sont intégrés dans une ou plusieurs parois du bâti (1), la structure de mousse métallique assurant une fonction de filtre.

2. Bâti selon la revendication 1, **caractérisé en ce que** le segment de mousse métallique (2) constitue un élément de paroi du bâti, intégrant un réseau de conduites et servant de radiateur (4) pour le refroidissement par liquide.

3. Bâti selon les revendications 1 et 2, **caractérisé en ce que** le réseau de conduites est fixé sur la mousse métallique (2) par brasage ou compression.

4. Bâti selon la revendication 1, **caractérisé en ce que** les segments de mousse métallique (2) sont de forme circulaire, ovale ou polygonale en vue.

5. Bâti selon la revendication 1 et l'une des revendications précédentes, **caractérisé en ce que** le segment de mousse métallique (2) est constitué d'aluminium avec une taille de pores de 30 ppi et une épaisseur de 10 mm.

6. Bâti selon la revendication 1 et l'une des revendications précédentes, **caractérisé en ce que** la mousse métallique est recouverte d'une couche de métal supplémentaire.

7. Bâti selon la revendication 6, **caractérisé en ce que** la couche de métal est en nickel.
